# FASCICULE DE BREVET EUROPEEN

(11) **EP 1 614 561 B1**
(45) Date de publication et mention de la délivrance du brevet: **08.08.2007**
(21) Numéro de dépôt: 05105033.4
(22) Date de dépôt: 09.06.2005
(51) Int. Cl.: B60H 1/00

(54) **Mécanisme de commande d'un organe à manoevrer, tel que de distribution sélective d'air pour installation de chauffage, de ventilation et/ou de climatisation, notamment d'un habitacle de véhicule**
Bedienungsmechanismus zur Bewegung eines Gliedes, wie ein Luftverteilungssystem für eine Klima-Anlage, insbesondere eines Fahrzeuginnenraums.
Operating mechanism for the movement of a member, like an air supply system for air-conditioning a passenger compartment of a vehicle.

(30) Priorité: 07.07.2004 FR 0407558
(43) Date de publication de la demande: 11.01.2006
(73) Titulaire: Valeo Systèmes Thermiques, 78321 Le Mesnil St Denis Cedex (FR)
(72) Inventeur: Droulez, Eric, 92150 Suresnes (FR); Pouysegur, Serge, 78610 Le Perray en Yvelines (FR); Truillet, Franck, 28410 Bu (FR)

(56) Documents cités:
- FR-A- 2 757 596
- GB-A- 1 006 183
- US-A1- 2003 193 207

## Description

### Domaine technique de l'invention.

L'invention est du domaine des mécanismes de commande d'un organe à manoeuvrer, pour installations de chauffage, de ventilation et/ou de climatisation, notamment pour habitacle de véhicule. Elle a pour objet un tel mécanisme de commande plus particulièrement appliqué à un mécanisme de distribution sélective d'air équipant une telle installation.

### Etat de la technique.

Il est courant de manoeuvrer un organe à partir d'un mécanisme de commande. Plus particulièrement dans le domaine automobile, un tel organe est susceptible d'être un mécanisme de distribution sélective d'air, ou encore un actionneur ou un organe de pilotage et/ou de manoeuvre d'un élément fonctionnel du véhicule. De tels mécanismes de commande sont couramment portés par un élément structurant du véhicule, tel qu'un boîtier d'une installation de chauffage, de ventilation et/ou de climatisation, ou encore une planche de bord.

Dans les installations de chauffage, de ventilation et/ou de climatisation pour habitacle de véhicule, celles-ci comprennent couramment un boîtier de réception d'un échangeur thermique. Ce boîtier loge en outre habituellement un mécanisme de distribution de l'air évacué hors du boîtier, sélectivement vers différents conduits d'acheminement de l'air en des zones déterminées de l'habitacle du véhicule. De tels mécanismes de distribution sont principalement constitués de volets montés mobiles sur le boîtier, qui sont en relation avec des organes de commande actionnables depuis l'intérieur de l'habitacle par un occupant du véhicule, grâce notamment à un tableau de commande. Ces volets sont par exemple des volets tambour, des volets papillon, des volets film, des volets drapeau, des volets étirables et/ou autres organes mobiles de répartition analogues. La mise en relation entre les volets et les organes de commande est couramment réalisée par l'intermédiaire de moyens de manoeuvre, du type à câble, à tringle, par micromoteurs ou analogue, qui mettent éventuellement en oeuvre des moyens du type à came, à crémaillère et/ou à levier. On pourra par exemple se reporter au document FR2757596 (VALEO CLIMATISATION) qui décrit de telles dispositions.

Le problème général à résoudre réside dans l'agencement de tels mécanismes de distribution sélective d'air, qui doivent être d'un encombrement le plus réduit possible, notamment pour ne pas induire un encombrement rédhibitoire du boîtier de l'installation. En outre, les moyens de manoeuvre des volets doivent présenter des surfaces limitées d'obstacle à la circulation d'air, pour notamment éviter des pertes de charge, tout en offrant une fiabilité satisfaisante et durable. Il en ressort que ces moyens de manoeuvre doivent être robustes avec néanmoins un nombre et une masse de pièces mécaniques les composant le plus restreint possible. Par ailleurs, les volets doivent être positionnés rigoureusement sur le trajet de l'air pour conforter leur efficacité. De plus de tels mécanismes de distribution sélective d'air sont susceptibles de comporter plusieurs volets, dont les différentes positions relatives d'un volet à l'autre doivent être en correspondance, voire en concordance pour une zone de trajet commune, de manière à ne pas faire obstacle à leur mobilité respective. On notera là encore un risque d'accroissement de l'encombrement et de la complexité du mécanisme pour autoriser une telle correspondance entre les différents trajets respectifs parcourus par les volets.

Il a par ailleurs été proposé d'exploiter un élément structurant de l'habitacle du véhicule, tel qu'une poutre de renfort, une planche de bord ou analogue, pour loger lesdits conduits d'acheminement de l'air en provenance du boîtier, et plus particulièrement en sortie des mécanismes de distribution sélective d'air qu'il loge. On pourra par exemple se reporter aux documents FR2789043 (VALEO CLIMATISATION SA) et W00154964 (BEHR Gmbh) qui décrivent de telles dispositions.

Une difficulté générale à surmonter réside dans l'organisation d'un mécanisme de commande porté par un élément structurant, qui permettent la manoeuvre depuis l'extérieur de cet élément structurant d'un organe, tel qu'un mécanisme de distribution sélective d'air, un moteur ou un actionneur en général, dont l'encombrement reste limité pour une efficacité et une précision de manoeuvre satisfaisante, fiable et durable.

### Objet de l'invention.

Le but général de la présente invention est de tendre à réduire les conséquences susvisées liées à l'encombrement des mécanismes de commande, tout en offrant pour un tel mécanisme une précision, une efficacité, une fiabilité et une durée de vie appropriées.

Un but particulier de la présente invention est de proposer un tel mécanisme de commande appliqué à un mécanisme de distribution sélective d'air des installations de chauffage, de ventilation et/ou de climatisation pour habitacle de véhicule. Notamment, il est visé par la présente invention de proposer un tel mécanisme dont l'encombrement et la structure permettent de limiter les pertes de charge de l'air les traversant, tout en étant fiable, précis et robuste.

Le mécanisme de la présente invention est un mécanisme de commande d'au moins un organe à manoeuvrer. Cet organe à manoeuvrer est susceptible d'être un actionneur, tel qu'un actionneur manuel ou motorisé, voire un organe de pilotage d'un élément fonctionnel du véhicule, écran ou analogue par exemple. Tel qu'il sera visé plus loin, et selon une application privilégiée de la présente invention, cet organe à manoeuvrer est notamment constitué d'au moins un volet mobile de distribution sélective d'air. Ce volet est par exemple un volet tambour, un volet papillon, un volet film, un volet drapeau, un volet étirable et/ou autre organe de répartition d'air analogue entre au moins deux canaux de distribution d'air ménagés à l'intérieur d'une chambre de circulation d'air.

L'organe à manoeuvrer est plus particulièrement logé à l'intérieur d'un élément structurant, notamment d'un véhicule. Selon un aspect de la présente invention, cet élément structurant est par exemple une planche de bord ou une poutre transversale de renfort du véhicule, qui loge éventuellement un module de distribution sélective d'air dans le cas où l'organe à manoeuvrer est au moins un volet.

Le mécanisme de l'invention comprend dans sa généralité des moyens de manoeuvre de l'organe à manoeuvrer qui sont portés par un support et qui sont en relation avec un organe de commande. Plus précisément, le support est rapporté sur l'élément structurant, en étant constitué d'au moins une platine. Cette platine est équipée de moyens de centrage et de fixation sur l'élément structurant, pour manoeuvrer l'organe logé à l'intérieur de l'élément structurant depuis l'extérieur de ce dernier.

Tel que visé plus haut, l'organe de manoeuvre commande par exemple un mécanisme de distribution sélective d'air d'une installation de chauffage, de ventilation et/ou de climatisation pour habitacle de véhicule. Les moyens de manoeuvre de l'organe à manoeuvrer, volet notamment, sont avantageusement disposés dans le plan général de la platine, de sorte que l'encombrement du mécanisme soit globalement contenu dans ce plan général. Il en ressort qu'une telle organisation avantageuse du mécanisme de commande en platine porteuse dans son plan général des moyens de manoeuvre, permet de manoeuvrer les volets de manière fiable et précise, en limitant l'encombrement du mécanisme rapporté sur l'élément structurant dans un plan voisin de l'une de ses parois.

Selon une première variante, les moyens de manoeuvre de l'organe à manoeuvrer, volet notamment, sont placés entre le support et une paroi extérieure de l'élément structurant, à l'intérieur d'un espace ménagé entre la paroi extérieure de l'élément structurant et la platine.

Selon une autre variante, les moyens de manoeuvre de l'organe à manoeuvrer, volet notamment, sont placés à l'intérieur de l'élément structurant, en étant notamment fixé sur un organe complémentaire qu'il loge, module de distribution sélective d'air par exemple.

Il en ressort que les moyens de manoeuvre des volets du mécanisme de distribution sélective d'air ne constituent en rien un obstacle à la circulation d'air, en raison de leur disposition en dehors du volume réservé à cette circulation. De telles dispositions sont avantageusement rendues possibles en offrant une fiabilité de fonctionnement et une robustesse idoine pour un encombrement le plus restreint possible, à partir de l'organisation du support en platine rapportée sur une paroi de l'élément structurant, et notamment à la face extérieure de ce dernier et/ou sur une paroi d'un module de distribution sélective d'air qu'il loge.

Selon diverses variantes de réalisation, les moyens de manoeuvre du volet sont du type à bielle et manivelle, ou à came par exemple. Dans le cas où la platine au moins supporte plusieurs organes à manoeuvrer, volets notamment, les moyens de manoeuvre qui leurs sont respectivement affectés sont susceptibles d'être de types différents.

Par exemple et selon une première variante de réalisation des moyens de manoeuvre de l'organe à manoeuvrer, volet notamment, ceux-ci sont du type à bielle et manivelle, et comprennent un jeu de tringles articulées, préférentiellement de manière coplanaire pour éviter un accroissement de l'encombrement du mécanisme, sur des organes de pivotement formant manivelle. Ces organes de pivotement sont notamment montés mobiles sur la platine, et sont en relation avec au moins un organe à manoeuvrer.

Par exemple encore et selon une deuxième variante de réalisation des moyens de manoeuvre de l'organe à manoeuvrer, volet notamment, ceux-ci sont du type à came, et comprennent au moins un bras de manoeuvre de l'organe au moins à manoeuvrer. Ce bras de manoeuvre est notamment guidé en mobilité le long d'au moins un chemin de came ménagé sur la platine.

Les moyens de centrage et de fixation associent de préférence des reliefs coopérants d'emboîtement respectivement ménagés sur la platine et sur l'élément structurant, et des moyens d'assemblage de la platine sur ce dernier, tel que par emboîtement, par vissage ou moyens analogues.

Les moyens de centrage et de fixation sont susceptibles d'être constitués par des organes distincts de centrage d'une part et de fixation d'autre part, tels que des pions de centrage et des moyens de fixation par vissage notamment, ou encore d'être constitués par des organes confondus, tel que du type par emboîtement élastique entre des reliefs coopérants déterminant la position relative du support par rapport à l'élément structurant. Le cas échéant, le soutien du volet par l'élément structurant à ses extrémités respectives, et sa mise en relation avec le support, participe des dits moyens de centrage et de fixation, en permettant avantageusement de réduire les éléments composant le mécanisme pour en réduire la masse et l'encombrement sans en affecter la précision ni la robustesse.

Dans le cas où l'organe à manoeuvrer est au moins un volet articulé pour sa manoeuvre sur l'élément structurant, celui-ci est notamment disposé à l'intérieur d'une chambre de circulation d'air ménagée à l'intérieur de l'élément structurant.

De préférence, l'élément structurant loge solidairement un module de distribution sélective d'air, notamment constitué d'un caisson cloisonné de répartition d'air. Dans ce cas, le volet au moins est susceptible d'être articulé à ses extrémités sur le caisson, en étant en relation à l'une de ses extrémités avec les moyens de manoeuvre portés par la platine.

Les moyens de manoeuvre sont en outre susceptibles d'être avantageusement placés entre une paroi intérieure de l'élément structurant et une paroi extérieure du module. Dans ce cas, les moyens de centrage et de fixation, associent préférentiellement des reliefs coopérants d'emboîtement respectivement ménagés sur la platine et sur le module, et des moyens d'assemblage de la platine sur ce dernier.

Selon diverses variantes de réalisation, et dans le cas où le mécanisme comporte au moins deux volets articulés, ceux-ci sont indifféremment orientés suivant des axes parallèles sur une même platine du support, ou encore suivant des axes concourants, orthogonaux notamment, sur des platines respectives du support, ces platines étant notamment orientées en dièdre l'une par rapport à l'autre.

Plus particulièrement et selon un exemple de réalisation, le mécanisme de commande comporte au moins deux volets manoeuvrés suivant des axes parallèles portés par une même platine. Plus particulièrement encore et selon un autre exemple de réalisation, le mécanisme de commande comporte au moins deux volets commandés suivant des axes, notamment concourants, qui sont compris dans des plans différents et portés par des platines respectives.

Selon les différentes variantes de réalisation de l'élément structurant, la poutre transversale de renfort du véhicule ou la planche de bord ménagent avantageusement la chambre de circulation d'air et définissent par cloisonnement des canaux de circulation d'air respective, le cas échéant par l'intermédiaire du module de distribution sélective d'air. Il est plus particulièrement préféré que l'élément structurant définisse les canaux de circulation d'air par l'intermédiaire d'au moins un module formé d'au moins caisson cloisonné qu'il loge, à l'intérieur duquel et sur lequel module est rapporté le volet au moins à ses extrémités.

### Description des figures.

La présente invention sera mieux comprise à la lecture de la description qui va en être faite d'exemples de réalisation, en relation avec les figures des planches annexées, dans lesquelles :
Les figure 1 et figure 2 sont des illustrations en perspective, respectivement vu d'arrière et vu de face partiellement en écorché, d'une poutre structurante d'un habitacle de véhicule équipé d'un couple de mécanismes de distribution sélective de la présente invention.
La figure 3 est une illustration en perspective d'une première variante de réalisation d'un mécanisme de distribution sélective d'air de la présente invention.
Les figure 4 et figure 5 sont des illustrations du mécanisme représenté sur la figure 3, dont les volets sont retirés, respectivement en perspective et en vue de dessus.
Les figure 6 et figure 7 sont des illustrations d'une deuxième variante de réalisation d'un mécanisme de distribution sélective d'air de la présente invention, respectivement en perspective et en vue de dessus.
La figure 8 est une illustration en perspective du mécanisme représenté sur les figure 6 et figure 7, dont les volets sont retirés.

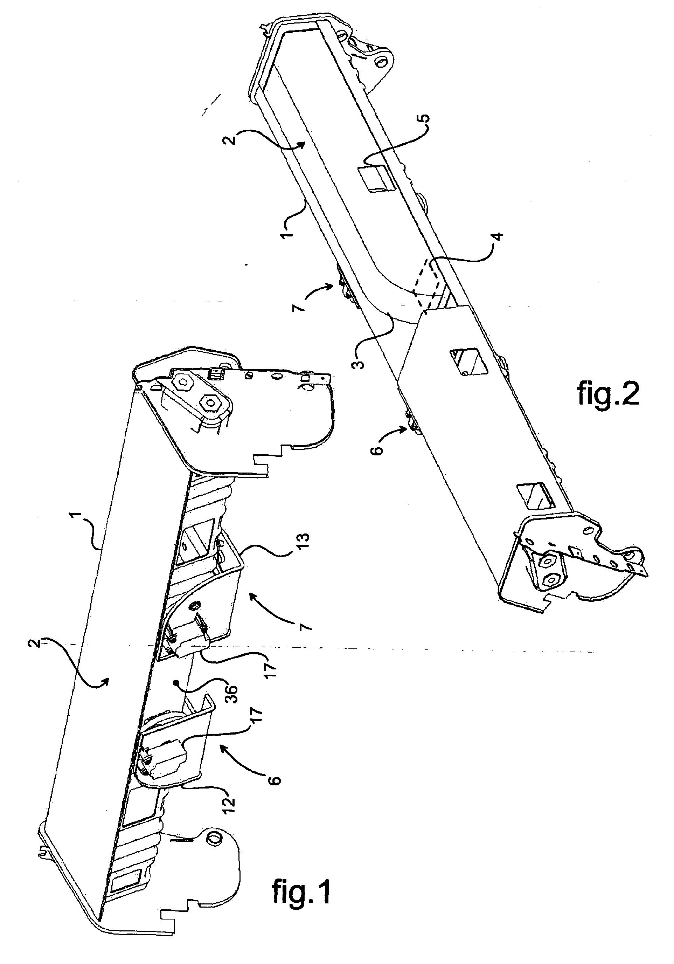

Sur les figure 1 et figure 2, une poutre structurante (1) d'un habitacle de véhicule est exploitée pour ménager dans son volume intérieur une chambre (2) de circulation d'air en provenance d'une installation de chauffage, de ventilation et/ou de climatisation, non représentée. Sur la figure 2, cette chambre (2) est plus particulièrement formée à partir d'au moins un caisson cloisonné (3) qui est logé à l'intérieur de la poutre (1). Cette dernière (1) comporte des ouvertures pour l'admission d'air (4) à l'intérieur de la chambre (2), et des ouvertures (5) pour l'évacuation sélective d'air vers des conduits respectifs, des bouches d'aération ou organes analogues non représentés.

En se reportant par ailleurs aux autres figures, la répartition de la circulation d'air à l'intérieur de la chambre (2) est réalisée au moyen de mécanismes (6,7) de distribution sélective d'air mettant en oeuvre des volets (8,9 ;10,11). Ces volets sont montés mobiles sur un support (12,13), qui est rapporté à la face extérieure de la poutre (1). Selon une autre variante de réalisation non illustrée, le support (12,13) est susceptible d'être rapporté sur le caisson cloisonné (3).

Plus particulièrement selon des variantes de réalisation non représentées, au moins les moyens de manoeuvre (18,19,20,21), voire aussi les supports (12,13) sont rapportés à l'intérieur de l'élément structurant (1), mais néanmoins à l'extérieur de la chambre de circulation d'air (2). Dans ce cas, il peut être envisagé de ménager dans la paroi extérieure (36) de l'élément structurant 1 une fenêtre d'introduction des moyens de manoeuvre (18,19, 20,21) voire aussi des supports (12, 13) pour leur fixation sur le caisson (3).

Le support (12,13) est constitué d'au moins une platine (14,15,16), qui est porteuse à sa face extérieure d'organes de commande (17) des volets (8,9,10,11), tels que des actionneurs connus du domaine. Ces derniers (17) sont en relation avec le volet (8,9,10,11) auquel ils sont affectés par l'intermédiaire de moyens de manoeuvre (18,19,20,21) qui sont placés en interposition entre le support (12,13) et la face extérieure de la poutre 1, voire le cas échant en interposition entre le caisson (3) et la poutre (1), en étant globalement disposés dans le plan général de la platine correspondante (14,15,16). Une telle organisation de ces mécanismes de distribution sélective d'air évite de disposer les moyens de manoeuvre (18,19,20,21) des volets (8,9,10,11) à l'intérieur de la chambre (2), pour ne pas constituer un obstacle à la libre circulation d'air, tout en offrant un encombrement restreint globalement contenu dans un plan voisin du plan général d'extension de la paroi (36) de l'élément structurant (1), ou de la paroi du caisson qu'il loge, sur laquelle les supports (12,13) sont rapportés.

Sur les variantes de réalisation illustrées, les volets (8,9,10,11) sont au nombre de deux pour chacun des supports (12,13). Ces volets sont soutenus à leurs extrémités (22,23) par la poutre (1), notamment le cas échéant par l'intermédiaire du caisson (3) logé et fixé à l'intérieur de la poutre (1). Le soutien des volets (8,9,10,11) par la poutre (1) est notamment réalisé en exploitant une paroi ou une cloison interne de la chambre (2), par exemple constituée d'une paroi (36) de la poutre (1) ou le cas échéant d'une paroi du caisson (3).

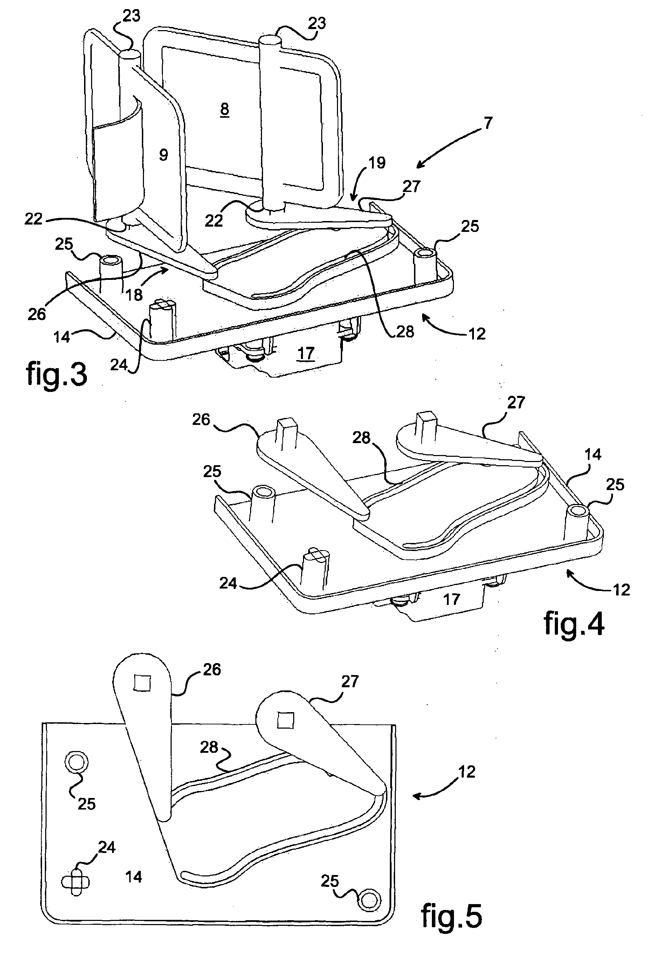

Sur les figure 3 à figure 5, les volets (8,9) sont orientés parallèlement en étant en relation à l'une (22) de leurs extrémités avec les moyens de manoeuvre (18,19) soutenus par une même platine (14), qui constitue principalement le support (12). Cette platine (14) comporte au moins un doigt de centrage (24) destiné à être reçu par emboîtement à l'intérieur d'un fût de la poutre (1) et/ou sur le caisson (3), et des cylindres (25) de réception de vis de fixation de la platine (14) à la poutre (1) et/ou au caisson (3).

Selon des variantes analogues de réalisation non représentées, le doigt (24) est susceptible d'être ménagé sur la poutre (1) et/ou sur le caisson (3), tandis que le fût est ménagé sur la platine (14), ou encore le centrage et la fixation de la platine (14) sur la poutre (1) et/ou sur le caisson (3) sont conjointement réalisés par emboîtement étroit d'organes coopérants respectivement ménagés sur le support (12,13) et sur la poutre (1) et/ou sur le caisson (3).

Les moyens de manoeuvre (18,19) des volets (8,9) sont du type à came, et comprennent des bras (26,27), qui sont respectivement affectés à chacun des volets (8,9) qu'ils commandent par l'une de leurs extrémités, et un chemin de guidage (28) de l'autre extrémité des bras (26,27), ce chemin de guidage (28) étant organisé en chemin de came.

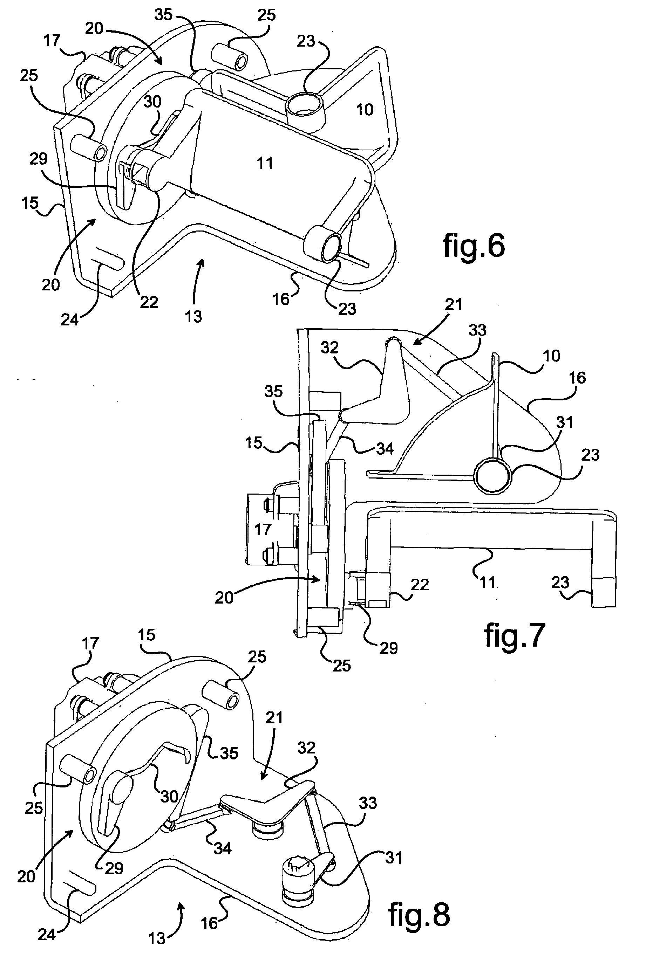

Sur les figure 6 à figure 8, les volets (10,11) sont orientés orthogonalement l'un par rapport à l'autre, en étant soutenus par la poutre (1) et/ou sur le caisson (3) . Les modalités de fixation du support (13) sur la poutre (1) sont similaires à celles précédemment décrites, au moins l'une des platines (15,16), et notamment la platine (15) sur l'exemple de réalisation illustré, comportant un doigt de centrage (24) et des cylindres (25) de réception de vis de fixation.

Les moyens de manoeuvre (20) de l'un (11) des volets sont du type à came, associant tel que précédemment décrit un bras (29) et un chemin de guidage (30) formant chemin à came. Les moyens de manoeuvre (21) de l'autre volet (10) sont quant à eux du type à bielle et manivelle. Plus particulièrement, le volet (10) est en relation avec une première manivelle (31), qui est elle-même en relation avec une deuxième manivelle (32) par l'intermédiaire d'une première tringle (33). Cette deuxième manivelle (32) est elle-même en relation avec l'actionneur correspondant (17) par l'intermédiaire d'une deuxième tringle (34) et d'un bras de manoeuvre (35), ce dernier s'étendant dans le plan général d'une première (15) des platines supportant les moyens de manoeuvre (20) de l'autre volet (11).

## Revendications

1. Mécanisme de commande d'au moins un organe à manoeuvrer (8,9,10,11) logé à l'intérieur d'un élément structurant (1), notamment d'un véhicule, ce mécanisme comprenant des moyens de manoeuvre de l'organe (8,9,10,11) qui sont portés par un support (12,13) et qui sont en relation avec un organe de commande (17), **caractérisé en ce que** le support (12,13) est rapporté sur l'élément structurant (1) en étant constitué d'au moins une platine (14,15,16) équipée de moyens de centrage (24) et de fixation (25) sur l'élément structurant (1), pour manoeuvrer l'organe (8,9,10,11) logé à l'intérieur de l'élément structurant depuis l'extérieur de ce dernier.

2. Mécanisme de commande selon l'une quelconque des revendications précédentes, **caractérisé en ce que** l'organe de manoeuvre est un actionneur.

3. Mécanisme de commande selon la revendication 1, **caractérisé en ce que** l'organe de manoeuvre commande un mécanisme de distribution sélective d'air d'une installation de chauffage, de ventilation et/ou de climatisation pour habitacle de véhicule.

4. Mécanisme de commande selon l'une quelconque des revendications précédentes, **caractérisé en ce que** l'élément structurant est une planche de bord.

5. Mécanisme de commande selon l'une quelconque des revendications précédentes, **caractérisé en ce que** l'élément structurant est une poutre transversale de renfort (1) du véhicule.

6. Mécanisme de commande selon l'une quelconque des revendications précédentes, **caractérisé en ce que** les moyens de manoeuvre (18,19,20,21) de l'organe à manoeuvrer (8,9,10,11), sont disposés dans le plan général de la platine (14,15,16), de sorte que l'encombrement du mécanisme soit globalement contenu dans ce plan général.

7. Mécanisme de commande selon l'une quelconque des revendications précédentes, **caractérisé en ce que** les moyens de manoeuvre (18,19,20,21) de l'organe à manoeuvrer (8,9,10,11), sont placés entre le support (12,13) et une paroi extérieure (36) de l'élément structurant (1).

8. Mécanisme de commande selon l'une quelconque des revendications 1 à 6, **caractérisé en ce que** les moyens de manoeuvre (18,19,20,21) de l'organe à manoeuvrer (8,9,10,11) sont placés à l'intérieur de l'élément structurant.

9. Mécanisme de commande selon l'une quelconque des revendications précédentes, **caractérisé en ce que** les moyens de manoeuvre (21) de l'organe à manoeuvrer (10) sont du type à bielle et manivelle, comprenant un jeu de tringles (33,34) articulées sur des organes de pivotement formant manivelle (31,32) montés mobiles sur la platine (16), et en relation avec au moins un organe à manoeuvrer (8,9,10,11).

10. Mécanisme de commande selon l'une quelconque des revendications 1 à 8, **caractérisé en ce que** les moyens de manoeuvre (18,19,20) de l'organe à manoeuvrer (8,9,11) sont du type à came, comprenant au moins un bras (26,27,29) de manoeuvre de l'organe (8,9,11) au moins à manoeuvrer, qui est guidé en mobilité le long d'au moins un chemin de came (28,30) ménagé sur la platine (14,15).

11. Mécanisme de commande selon l'une quelconque des revendications précédentes, **caractérisé en ce que** les moyens de centrage (24) et de fixation (25) associent des reliefs coopérants d'emboîtement respectivement ménagés sur la platine (14,15) et sur l'élément structurant (1), et des moyens d'assemblage de la platine (14,15) sur ce dernier (1).

12. Mécanisme de commande selon l'une quelconque des revendications précédentes, **caractérisé en ce que** l'organe à manoeuvrer est au moins un volet (8,9,10,11) articulé pour sa manoeuvre sur l'élément structurant (1,3) et disposé à l'intérieur d'une chambre (2) de circulation d'air ménagée à l'intérieur de l'élément structurant.

13. Mécanisme de commande selon la revendication 12, **caractérisé en ce que** l'élément structurant loge solidairement un module de distribution sélective d'air sur lequel est articulé à ses extrémités le volet au moins, qui est en relation à l'une de ses extrémités (23) avec les moyens de manoeuvre (18,19,20,21) portés par la platine (14,15,16).

14. Mécanisme de commande selon la revendication 13, **caractérisé en ce que** le module de distribution sélective d'air est constitué d'un caisson cloisonné de répartition d'air.

15. Mécanisme de commande selon l'une quelconque des revendications 13 et 14, **caractérisé en ce que** les moyens de manoeuvre sont placés entre une paroi intérieure de l'élément structurant et une paroi extérieure du module.

16. Mécanisme de commande selon l'une quelconque des revendications 13 et 14, **caractérisé en ce que** les moyens de centrage (24) et de fixation (25) associent des reliefs coopérants d'emboîtement respectivement ménagés sur la platine (14,15) et sur le module (3), et des moyens d'assemblage de la platine (14,15) sur ce dernier (3).

17. Mécanisme de commande selon la revendication 12, **caractérisé en ce qu**'il comporte au moins deux volets (8,9) manoeuvrés suivant des axes parallèles portés par une même platine (14).

18. Mécanisme de commande selon la revendication 12, **caractérisé en ce qu'**il comporte au moins deux volets (10,11) commandés suivant des axes compris dans des plans différents et portés par des platines respectives (15,16).

19. Mécanisme de commande selon les revendications 5 et 12, **caractérisé en ce que** la poutre (1) transversale de renfort du véhicule ménage la chambre (2) de circulation d'air et définit par cloisonnement des canaux de circulation d'air respective.

20. Mécanisme de commande selon les revendications 4 et 12, **caractérisé en ce que** la planche de bord ménageant la chambre (2) de circulation d'air et définit par cloisonnement des canaux de circulation d'air respective.

21. Mécanisme de commande selon la revendication 13 et l'une quelconque des revendications 19 et/ 20, **caractérisé en ce que** l'élément structurant (1) définit les canaux de circulation d'air par l'intermédiaire d'au moins un module qu'il loge.

## Claims

1. Mechanism for controlling at least one component to be manipulated (8, 9, 10, 11) housed inside a structural element (1), in particular a vehicle, which mechanism includes means for manipulating the component (8, 9, 10, 11), which are held by a support (12, 13) and which are associated with a control component (17), **characterised in that** the support (12, 13) is added to the structural element (1) by being constituted by at least one mounting plate (14, 15, 16) equipped with means for centring (24) and fixing (25) on the structural element (1), in order to manipulate the component (8, 9, 10, 11) housed inside the structural element from outside of the latter.

2. Control mechanism according to any one of the previous claims, **characterised in that** the manipulation component is an actuator.

3. Control mechanism according to claim 1, **characterised in that** the manipulation component controls a selective air distribution mechanism of a heating, ventilating and/or air conditioning system for a car interior.

4. Control mechanism according to any one of the previous claims, **characterised in that** the structural element is a dashboard.

5. Control mechanism according to any one of the previous claims, **characterised in that** the structural element is a transverse reinforcement beam (1) of the vehicle.

6. Control mechanism according to any one of the previous claims, **characterised in that** the manipulation means (18, 19, 20, 21) of the component to be manipulated (8, 9, 10, 11) are arranged in the general plane of the mounting plate (14, 15, 16), so that the bulk of the mechanism is generally contained in this general plane.

7. Control mechanism according to any one of the previous claims, **characterised in that** the manipulation means (18, 19, 20, 21) of the component to be manipulated (8, 9, 10, 11) are placed between the support (12, 13) and an external wall (36) of the structural element (1).

8. Control mechanism according to one of the claims 1 to 6, **characterised in that** the manipulation means (18, 19, 20, 21) of the component to be manipulated (8, 9, 10, 11) are placed inside the structural element.

9. Control mechanism according to any one of the previous claims, **characterised in that** the manipulation means (21) of the component to be manipulated (10) are of the crank mechanism type, including a set of rods (33, 34) pivotably connected to pivot components forming a crank (31, 32) movably mounted on the mounting plate (16), and associated with at least one component to be manipulated (8, 9, 10, 11).

10. Control mechanism according to any one of claims 1 to 8, **characterised in that** the manipulation means (18, 19, 20) of the component to be manipulated (8, 9, 11) are of the cam type, including at least one arm (26, 27, 29) for manipulating the component (8, 9, 11) at least to be manipulated, which is guided in movement along at least one cam path (28, 30) provided on the mounting plate (14, 15).

11. Control mechanism according to any one of the previous claims, **characterised in that** the centring means (24) and the fixing means (25) join cooperating assembly reliefs respectively provided on the mounting plate (14, 15) and on the structural element (1), and means for assembling the mounting plate (14, 15) on the latter (1).

12. Control mechanism according to any one of the previous claims, **characterised in that** the component to be manipulated is at least one valve (8, 9, 10, 11) pivotably connected, for manipulation thereof, to the structural element (1, 3), and arranged inside an air circulation chamber (2) inside the structural element.

13. Control mechanism according to claim 12, **characterised in that** the structural element integrally houses a selective air distribution module to which at least the valve is pivotably connected at its ends, which valve is associated at one of its ends (23) with the manipulation means (18, 19, 20, 21) borne by the mounting plate (14, 15, 16).

14. Control mechanism according to claim 13, **characterised in that** the selective air distribution module is constituted by a partitioned air distribution housing.

15. Control mechanism according to either one claims 13 or 14, **characterised in that** the manipulation means are placed between an interior wall of the structural element and an exterior wall of the module.

16. Control mechanism according to either one of claims 13 or 14, **characterised in that** the centring means (24) and the fixing means (25) join cooperating assembly reliefs respectively provided on the mounting plate (14, 15) and on the module (3), and means for assembling the mounting plate (14, 15) on the latter (1).

17. Control mechanism according to claim 12, **characterised in that** it comprises at least two valves (8, 9) manipulated according to parallel axes of the same mounting plate (14).

18. Control mechanism according to claim 12, **characterised in that** it comprises at least two valves (10, 11) controlled according to axes of different planes and respective mounting plates (15, 16).

19. Control mechanism according to claims 5 and 12, **characterised in that** the transverse reinforcement beam (1) of the vehicle houses the air circulation chamber (2) and defines, by partitioning, the respective air circulation channels.

20. Control mechanism according to claims 4 and 12, **characterised in that** the dashboard houses the air circulation chamber (2) and defines, by partitioning, the respective air circulation channels.

21. Control mechanism according to claim 13 and either one of claims 19 or 20, **characterised in that** the structural element (1) defines the air circulation channels by means of at least one module that it houses.

## Patentansprüche

1. Steuermechanismus für mindestens ein zu betätigendes Organ (8, 9, 10, 11) im Inneren eines strukturierenden Elements (1), insbesondere eines Fahrzeugs, wobei dieser Mechanismus Mittel zum Betätigen des Organs (8, 9, 10, 11) besitzt, die auf einer Halterung (12, 13) befestigt sind und mit einem Steuerorgan (17) zusammenwirken, **dadurch gekennzeichnet, dass** die Halterung (12, 13) am strukturierenden Element (1) angebaut ist und aus mindestens einer Platte (14, 15, 16) besteht, die mit Zentriermitteln (24) und Befestigungsmitteln (25) am strukturierenden Element (1) versehen sind, um das Organ (8, 9, 10, 11), das sich im Inneren des strukturierenden Elements (1) befindet, von außen zu betätigen.

2. Steuermechanismus nach einem der vorhergehenden Patentansprüche, **dadurch gekennzeichnet, dass** das Betätigungsorgan ein Wirkglied ist.

3. Steuermechanismus nach Patentanspruch 1, **dadurch gekennzeichnet, dass** das Betätigungsorgan einen Mechanismus zum selektiven Verteilen der Luft einer Heiz-, Lüftungs- und/oder Klimaanlage in einem Fahrgastraum ansteuert.

4. Steuermechanismus nach einem der vorhergehenden Patentansprüche, **dadurch gekennzeichnet, dass** das strukturierende Element ein Armaturenbrett ist.

5. Steuermechanismus nach einem der vorhergehenden Patentansprüche, **dadurch gekennzeichnet, dass** das strukturierende Element ein Verstärkungsquerträger (1) des Fahrzeugs ist.

6. Steuermechanismus nach einem der vorhergehenden Patentansprüche, **dadurch gekennzeichnet, dass** die Betätigungsmittel (18, 19, 20, 21) des zu betätigenden Organs (8, 9, 10, 11) so auf der Hauptfläche der Platte (14, 15, 16) angeordnet sind, dass die Abmessungen des Mechanismus insgesamt auf dieser Fläche enthalten sind.

7. Steuermechanismus nach einem der vorhergehenden Patentansprüche, **dadurch gekennzeichnet, dass** die Betätigungsmittel (18, 19, 20, 21) des zu betätigenden Organs (8, 9, 10, 11) zwischen der Halterung (12,13) und einer Außenwand (36) des strukturierenden Elements (1) angebracht sind.

8. Steuermechanismus nach einem beliebigen der Patentansprüche 1 bis 6, **dadurch gekennzeichnet, dass** die Betätigungsmittel (18, 19, 20, 21) des zu betätigenden Organs (8, 9, 10, 11) im Inneren des strukturierenden Elements angebracht sind.

9. Steuermechanismus nach einem der vorhergehenden Patentansprüche, **dadurch gekennzeichnet, dass** die Betätigungsmittel (21) des zu betätigenden Organs (10) aus einer Kurbelstange und einer Kurbel bestehen, die ein Gestänge (33, 34) besitzen, das an eine Kurbel (31, 32) bildenden Schwenkorgane angeordnet ist, die beweglich auf der Platte (16) angebracht sind und mit mindestens einem zu betätigenden Organ (8, 9, 10, 11) zusammenwirken.

10. Steuermechanismus nach einem beliebigen der Patentansprüche 1 bis 6, **dadurch gekennzeichnet, dass** die Betätigungsmittel (18, 19, 20) des zu betätigenden Organs (8, 9, 11) aus einer Nockenwelle bestehen, wobei sie mindestens einen Arm (26, 27, 29) zum Betätigen des zumindest zu betätigenden Organs (8, 9, 11) besitzen, der in seiner Bewegung mindestens einen auf der Platte (14, 15) angebrachten Nockenweg (28, 30) entlang geführt ist.

11. Steuermechanismus nach einem der vorhergehenden Patentansprüche, **dadurch gekennzeichnet, dass** die Zentriermittel (24) und Befestigungsmittel (25) durch Einrasten zusammenwirkende bzw. auf der Platte (14, 15) und dem strukturierenden Element (1) angebrachte Reliefs mit Mitteln zum Zusammenfügen der Platte (14, 15) mit dem strukturierenden Element (1) verknüpft sind.

12. Steuermechanismus nach einem der vorhergehenden Patentansprüche, **dadurch gekennzeichnet, dass** das zu betätigende Organ zumindest eine Klappe (8, 9, 10, 11) ist, die zu ihrer Betätigung an einem strukturierenden Element (1, 3) gelenkig befestigt und im Inneren einer im strukturierenden Element vorgesehenen Luftzirkulationskammer (2) angebracht ist.

13. Steuermechanismus nach Patentanspruch 12, **dadurch gekennzeichnet, dass** im strukturierenden Element ein fest damit verbundener Modul zum selektiven Verteilen der Luft vorgesehen ist, an dem an seinen Enden mindestens die Klappe gelenkig befestigt ist, die mit einem ihrer Enden (23) mit den von der Platte (14, 15, 16) gehaltenen Betätigungsmitteln (18, 19, 20, 21) zusammenwirkt.

14. Steuermechanismus nach Patentanspruch 13, **dadurch gekennzeichnet, dass** der Modul zum selektiven Verteilen der Luft aus einem Kasten mit Trennwänden zum Aufteilen von Luftströmen besteht.

15. Steuermechanismus nach einem beliebigen der Patentansprüche 13 und 14, **dadurch gekennzeichnet, dass** die Betätigungsmittel zwischen einer Innenwand des strukturierenden Elements und einer Außenwand des Moduls angebracht sind.

16. Steuermechanismus nach einem beliebigen der Patentansprüche 13 und 14, **dadurch gekennzeichnet, dass** die Zentriermittel (24) und Befestigungsmittel (25) durch Einrasten zusammenwirkende bzw. auf der Platte (14, 15) und dem Modul (3) angebrachte Reliefs mit Mitteln zum Zusammenfügen der Platte (14, 15) mit dem Modul (3) verknüpft sind.

17. Steuermechanismus nach Patentanspruch 12, **dadurch gekennzeichnet, dass** er mindestens zwei Klappen (8, 9) besitzt, die auf parallelen, von ein und derselben Platte (14) getragenen Achsen betätigt werden.

18. Steuermechanismus nach Patentanspruch 12, **dadurch gekennzeichnet, dass** er mindestens zwei Klappen (10,11) besitzt, die auf Achsen gesteuert werden, die sich in verschiedenen Ebenen befinden und von den jeweiligen Platten (15, 16) getragen werden.

19. Steuermechanismus nach den Patentansprüchen 5 und 12, **dadurch gekennzeichnet, dass** der Verstärkungsquerträger (1) des Fahrzeugs die Luftzirkulationskammer (2) beinhaltet und durch Trennwände einzelne Luftzirkulationskanäle bildet.

20. Steuermechanismus nach den Patentansprüchen 4 und 12, **dadurch gekennzeichnet, dass** das Armaturenbrett des Fahrzeugs die Luftzirkulationskammer (2) beinhaltet und durch Trennwände einzelne Luftzirkulationskanäle bildet.

21. Steuermechanismus nach Patentanspruch 13 und einem beliebigen der Patentansprüche 19 und/oder 20, **dadurch gekennzeichnet, dass** das strukturierende Element (1) die Luftzirkulationskanäle anhand mindesten eines darin angebrachten Moduls bildet.
